# EUROPEAN PATENT APPLICATION

(11) **EP 3 552 883 A1**
(43) Date of publication of application: **16.10.2019**
(21) Application number: 18465512.4
(22) Date of filing: 12.04.2018
(51) Int. Cl.: B60R 11/04

(54) **CAMERA MOUNTING DEVICE FOR A DIGITAL MIRROR SYSTEM**

(71) Applicant: Continental Automotive GmbH, 30165 Hannover (DE)
(72) Inventor: Giuchici, Marius, 300260 Timisoara (RO); Stoian, Liviu Achim, 300238 Timisoara (RO); Pela, Emanuel-Ovidiu, 320110 Resita (RO)

(57) **Abstract**

The invention provides a camera mounting device (1) for a digital mirror system of a vehicle (2). The camera mounting device (1) comprises an actuator (40), a transmission element (10), a friction area (20) and a pivotable camera arm (30). The actuator (40) is coupled to the transmission element (10), and is configured to drive the transmission element (10). The transmission element (10) is coupled to a first end of the camera arm (30) via the friction area (20) . The transmission element (10) is configured to rotate around a first axis of rotation (15) and the camera arm (30) is configured to rotate around a second axis of rotation (25), wherein the first axis of rotation (15) is not equal to the second axis of rotation (25). Further, the friction area (20) is configured to allow slip between the transmission element (10) and the camera arm (30).

## Description

The invention relates to a camera mounting device, a digital mirror system and a vehicle comprising the camera mounting device and/or the digital mirror system.

Development in the automotive industry is increasingly moving towards the digitization of systems. One of the systems to be digitized may be the vehicle mirrors (side mirrors and/or rear-view mirror) . The mirror may be replaced by a digital mirror system, comprising a camera and/or one display element. In addition to advantages in aerodynamics and fuel consumption, other technical improvements may be achieved with the digital mirror system. For example, images from several cameras may be combined to form a surround view system, distortions or image effects may be filtered and blinding the driver by other vehicles may be avoided. In conjunction with additional advanced driving assistance systems, the digital mirror system may be used to warn the driver from other vehicles approaching from behind or at a blind spot. However, the digital mirror system may be designed robust, as it defines the width of the vehicle and may be the first part of the vehicle being hit by an obstacle.

It may be an object to provide a pivotable mounting for a camera.

The object is solved by the subject matter of the independent claims, wherein further embodiments are incorporated in the dependent claims.

A first aspect provides a camera mounting device for a digital mirror system of a vehicle. The camera mounting device comprises an actuator, a transmission element, a friction area and a pivotable camera arm. The actuator is coupled to the transmission element, and is configured to drive the transmission element. The transmission element is coupled to a first end of the camera arm via the friction area. The transmission element is configured to rotate around a first axis of rotation; the camera arm is configured to rotate around a second axis of rotation, wherein the first axis of rotation is not equal to the second axis of rotation. Further, the friction area is configured to allow slip between the transmission element and the camera arm.

Thus, the camera mounting device may provide a foldable digital mirror system, which may extend or retract a camera arm equipped with a camera. Further, the camera arm may be extended or retracted automatically by the means of an actuator, such as an electric motor, a pneumatic drive or a hydraulic drive. This may be advantageous for automatically retracting the camera arm during parking or when passing through narrow spaces. Further, to protect the actuator from a counterforce introduced into the camera arm, the actuator and the camera arm may be (indirectly) coupled over a transmission element and a friction area. The friction area may be arranged between the transmission element and the camera arm, and may allow slip between the transmission element and the camera arm, if the counterforce exceeds a predefined threshold. Furthermore, the friction area may allow slip if the camera arm abuts against an end stopper, which may be provided within the camera mounting device. Thus, the actuator may be prevented from overheating by having the friction area. The transmission element and the camera arm may have different axes of rotation, e.g. the first axis of rotation and the second axis of rotation, wherein the two axes of rotation are not equal. The transmission element may rotate around the first axis of rotation and the camera arm may rotate around the second axis of rotation. In an embodiment, the first axis of rotation is parallel to the second axis of rotation. In another embodiment, the first axis of rotation and the second axis of rotation enclose an angle of 45°. It should be noted that also other angles between the first axis of rotation and the second axis of rotation might be possible, for example 30°, 60° or 90°.

Further, it should be noted that the camera mounting device might comprise additional components, for example a position sensor, a control module, a housing and/or a spring. The housing may be connected to the body of the vehicle and/or be formed at least partially by the body of the vehicle. Further, the camera arm may extend through the housing.

Furthermore, the width of the vehicle equipped with the camera mounting device may be reduced to drive through narrow spaces by retracting the camera arm by means of the actuator.

According to an embodiment, the friction area is configured to allow slip between the transmission element and the camera arm, if a counterforce introduced on the camera arm exceeds a predefined threshold, to protect the actuator and/or the transmission element from the introduced counterforce.

If the vehicle with the camera mounting device hits an obstacle, the obstacle may applies a force to the camera arm of the camera mounting device. To protect the camera arm, the actuator and/or the transmission element, the friction area between the camera arm and the transmission element may be configured to allow slip between the camera arm and the transmission element. Thus, the camera arm may rotate around the second axis of rotation and retracts, wherein at the same time the transmission element and/or the actuator does not move or rotate.

According to an embodiment, the camera mounting device further comprises a position sensor, which is configured to detect an actual position of the camera arm.

Thus, the position sensor may detect the position of the camera arm and/or the angle between the camera arm and the longitudinal axis of the vehicle, i.e. if the camera arm is extended, retracted or anywhere in between. Further, the position sensor may also detect the actual position of the camera arm, if an obstacle has hit the camera arm and therefore, the camera arm pivoted around the second axis of rotation, since the friction area allowed slip.

According to a further embodiment, the camera mounting device further comprises a control module. The control module is configured to control the actuator according to the actual position of the camera arm detected by the position sensor.

Thus, the actual position of the camera arm may be used to control the actuator to extend or to retract the camera arm. The control of the actuator may be performed by the control module according to the position detected by the position sensor.

According to an embodiment, the actuator is coupled to the transmission element via a belt, a chain or a cable.

According to an embodiment, the actuator is coupled to the transmission element via a worm shaft.

Thus, the first axis of rotation, around which the transmission element rotates, and the main axis of the actuator may be perpendicular. By the use of a worm shaft the arrangement may be arranged space saving in the camera mounting device and/or the housing thereof. Further, the worm shaft may have a self-locking characteristic, such that it further protects the actuator from being rotated by an introduced force.

According to another embodiment, the actuator is coupled to the transmission element via a gear arrangement.

Thus, two gear wheel may engage into each other, wherein one of the gear wheels is arranged at the actuator and the other gear wheel is arranged at the transmission element and/or the transmission element itself is a gear wheel.

According to an embodiment, the actuator is coupled to the transmission element via direct contact and friction.

According to an embodiment, the first axis of rotation is parallel to the second axis of rotation, and the first axis of rotation is shifted by a predefined distance from the second axis of rotation.

Thus, the first axis of rotation and the second axis of rotation are parallel to each other, but are not the same, such that a distance between these axes of rotation occurs. According to an embodiment, a line between the first axis of rotation and the second axis of rotation is perpendicular to the longitudinal axis of the vehicle, but the invention is not limited thereto.

According to an embodiment, the first axis of rotation and the second axis of rotation enclose an angle of 45°.

Thus, the first axis of rotation and the second axis of rotation are not parallel or perpendicular. The angle between the first axis of rotation and the second axis of rotation is 45°. It should be noted that in this case, a spur gear, with or without the friction area, might be used to transfer the force from the actuator to the camera arm.

Further, the vehicle may form a part of the housing of the camera mounting device, extending away from the longitudinal axis of the vehicle. Furthermore, the housing part of the vehicle may comprise a recess, wherein the camera arm may extend into and/or beyond the recess. A contact surface between the camera arm and the housing part of the vehicle may include an angle with the longitudinal axis of the vehicle, wherein the angle may be 45°, 30°, 60° or 90°.

Alternatively or in addition, the embodiment with a rotation around an inclined second axis of rotation (in view of the longitudinal axis of the vehicle) may not include the transmission element and/or the friction area. In this case, the actuator may be coupled to the camera arm via a spur gear to achieve a rotation around an inclined, in view of the first axis of rotation and/or the longitudinal axis of the vehicle, second axis of rotation.

It should be noted that the angle enclosed by the first axis of rotation and the second axis of rotation may be different to 45°, i.e. 30°, 60° or 90°.

According to another embodiment, the camera mounting device comprises a spring. The spring is configured to bias the friction area with a predefined contact pressure to transfer a force from the transmission element to the camera arm.

Thus, the spring may apply a bias force on the friction area to allow a force transmission from the transmission element to the camera arm. The higher the bias force of the spring, the more force may be transmitted from the transmission element to the camera arm. On the other hand, the bias force should not be too high, as also the amount of allowed slip may be reduced accordingly. Therefore, the spring and the bias force of the spring may be determined according to the needed bias force to transmit force from the transmission element to the camera arm and the threshold for allowing slip. Thus, the spring may press the transmission element and the camera together at the friction area.

According to an embodiment, the actuator is one of an electric motor, a pneumatic drive or a hydraulic drive.

According to another aspect, a digital mirror system is provided. The digital mirror system comprises a camera and the above and hereinafter described camera mounting device. The camera is arranged at a second end of the camera arm of the camera mounting device, which is opposite to the friction area. Further, the camera faces to the side and/or backwards, when the digital mirror system is mounted to a vehicle (in view of the orientation of the vehicle).

According to yet another aspect of the invention, a vehicle comprising the above and hereinafter described camera mounting device and/or the digital camera system is provided.

The vehicle may, for example, be a motor vehicle, such as a car, bus or truck, but also a ship, a boat, an aircraft or a helicopter.

The above aspects and examples will become apparent from and be elucidated with reference to the embodiments described hereinafter.

Exemplary embodiments will be described in the following with reference to the following drawings, which are diagrammatic and not to scale:
- Fig. 1a: and 1b shows a top view of a digital mirror system according to an embodiment.
- Fig. 2: shows a front view of a digital mirror system according to an embodiment.
- Fig. 3a: to 3d shows different possibilities of couplings between the transmission element and the actuator according to embodiments.
- Fig. 4: shows another arrangement of a camera arm in the extended position, according to an embodiment.
- Fig. 5: shows another arrangement of a camera arm in the retracted position, according to an embodiment.
- Fig. 6: shows a vehicle with a camera mounting device according to an embodiment.

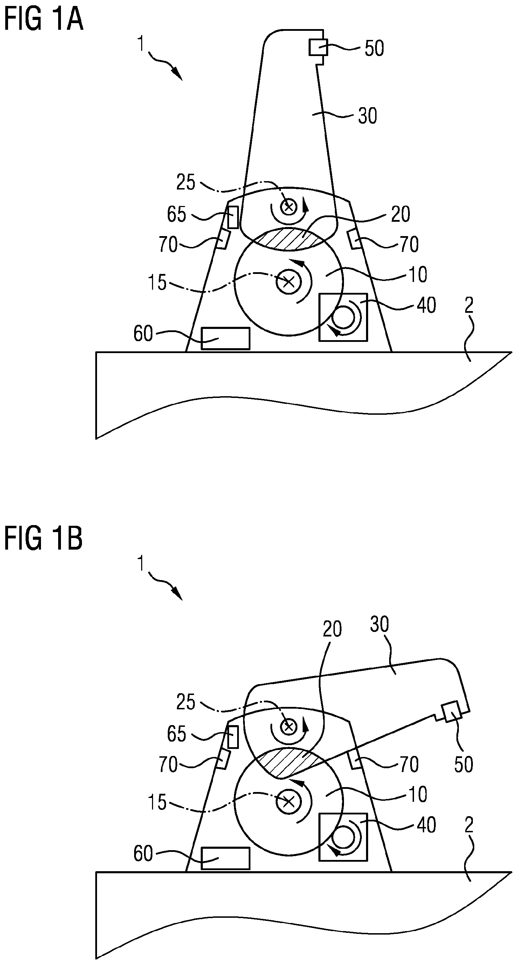

Figs. 1a and 1b show a top view of a digital mirror system for a vehicle 2. The digital mirror system comprises a camera 50 and a camera mounting device 1. The camera mounting device 1 comprises a transmission element 10, a friction area 20, a pivotable camera arm 30 and an actuator 40. The actuator 40 may be an electric motor, a pneumatic drive or a hydraulic drive. The actuator 40 is coupled to the transmission element 10, and is configured to drive the transmission element 10 to rotate or pivot around a first axis of rotation 15. The camera arm 30 is configured to rotate or pivot around a second axis of rotation 25 and is coupled to the transmission element 10 via the friction area 20. The friction area 20 is configured to allow slip between the camera arm 30 and the transmission element 10. Further, the camera arm 30 may be extracted (pointing away from the vehicle 2) or retracted (close to the vehicle 2). It should be noted that the first axis of rotation 15 and the second axis of rotation 25 are not equal to each other. Further, in Figs. 1a and b the first axis of rotation 15 and the second axis of rotation are parallel to each other and are shifted apart from each other by a predefined distance. In other words, the actuator 40 drives the transmission element 10 to rotate and the transmission element 10 forces the camera arm 30, via the friction area, to rotate. Thus, the actuator 40 indirectly drives or pivots the camera arm 30 to retract or to extend (in view of a vehicle to which the digital mirror system belongs) . The friction area 20, located between the transmission element 10 and the camera arm 30, is configured to allow slip between these two parts. In particular, the friction area 20 allows slip, if a counterforce introduced into the camera arm 30 exceeds a predefined threshold, for example 10N or 20N, to protect the actuator 40, the camera arm 30 and/or the transmission element 10 from the introduce counterforce. The counterforce may be introduced by an obstacle, i.e. a tree, which hits against the camera arm 30 of the mounting device 1. Alternatively or in addition, the friction area 20 may allow slip during operation of the camera mounting device 1, in particular, if the camera arm 30 adjoins at one of an end stopper 70, to protect the actuator 40 from overheating. It should be noted that the actuator 40 might be coupled to the transmission element 10 in multiple ways, such as via a belt, a chain, a cable, a worm shaft, a gear arrangement or via a direct contact and friction. The digital mirror system may further comprise a position sensor 65 and/or a control module 60. The position sensor 65 may be configured to detect the actual position of the camera arm 30 between the two end stoppers 70. Thus, with the position sensor 65 it may be determined if the camera arm 30 is extended, retracted or in between. The control module 60 may be configured to control the actuator 40 to drive the transmission element 10. Further, the control module 60 may control the actuator 40 according to the actual position of the camera arm 30 detected by the position sensor 65. The arrows on the actuator 40, the transmission element 10 and the camera arm 30 indicate the direction of rotation in view of each other. Thus, if the transmission element 10 rotates clockwise, the camera arm 30 rotates counter clockwise, and vice versa.

The camera 50 of the digital mirror device 1 may faces sideward and/or backward. The camera mounting device 1 is connected to the body of the vehicle 2 and/or the vehicle 2 forms a part of the housing of the camera mounting device 1. Further, the camera mounting device 1 may be pivotable to reduce the width of the vehicle 2 equipped with the camera mounting device 1. In particular, during parking of the vehicle 2 and/or when driving through a narrow street. Furthermore, if the camera arm 30 hits against an obstacle, e.g. a tree, which introduces a counterforce into the camera arm 30. Then the friction area 20 allows the camera arm 30 to slip and therefore, to rotate around the second axis of rotation 25 and to retract. By doing so, the transmission element 10, the camera arm 30 and/or the actuator 40 are protected from the influence of the impact or the counterforce introduced into the camera arm 30. It should be noted that the camera mounting device 1 might also comprise a housing, which enclose the components of the camera mounting device 1, i.e. to protect these from environmental influences. Further, the body of the vehicle 2 may form a part of the housing.

Fig. 1a shows the digital mirror system in an extended position, in which the digital mirror system normally operates during driving of the vehicle 2. Thus, the camera 50 is facing backwards to observe the traffic besides and/or behind the vehicle 2.

Fig. 1b shows the digital mirror device in a retracted position, in which the digital mirror system may be during parking of the vehicle 2, if the camera arm 30 was hit by an obstacle or if the vehicle 2 drives through a narrow street. Further, it is clear to the skilled person, that the camera arm 30 pivots around the second axis of rotation 25, which is different to the first axis of rotation 15.

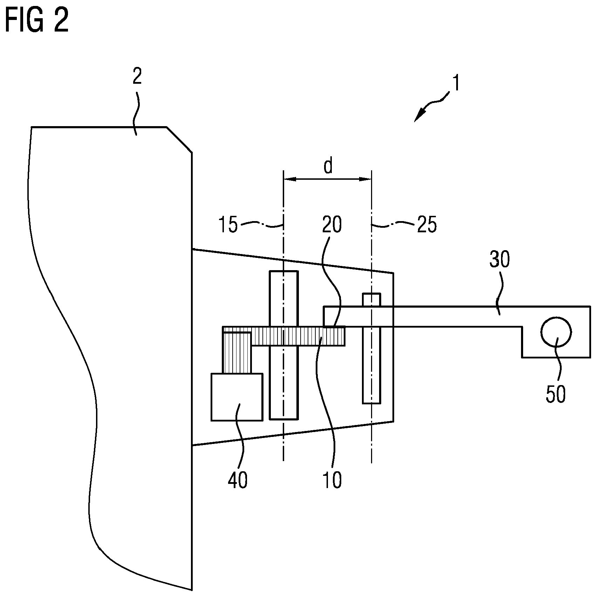

Fig. 2 shows the digital mirror device in a front view. For the sake of simplification, the position sensor and the control module are omitted in Fig. 2. The first axis of rotation 15 and the second axis of rotation 25 are parallel to each other and are spaced by the predefined distance d, for example 2cm or 5cm. The friction area 20 is arranged between the camera arm 30 and the transmission element 10. Further, a spring (not shown) may be arranged in the camera mounting device 1 to bias the friction area 20 with a predefined contract pressure to transfer force from the transmission element 10 and/or the actuator 40 to the camera arm 30. Thus, the spring may apply of force on the transmission element 10 and/or the camera arm 30 and presses them together at the friction area 20.

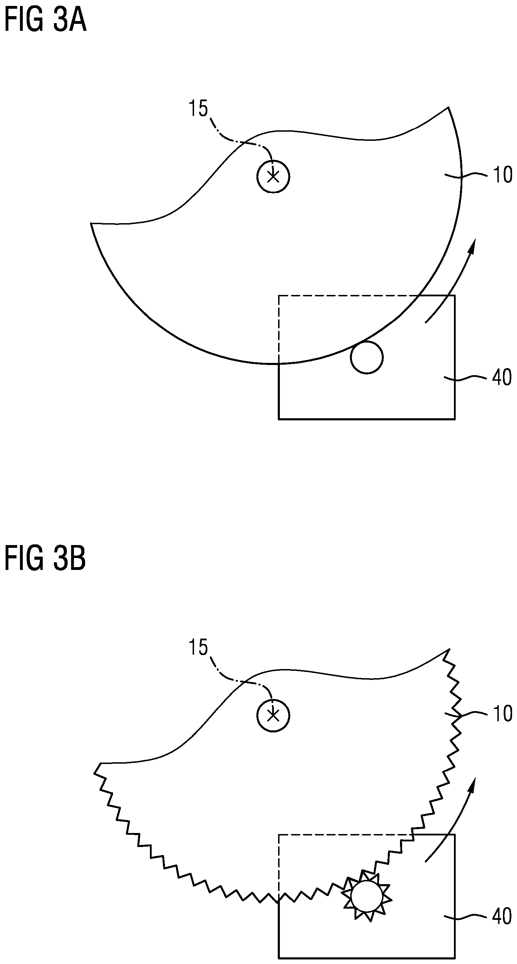

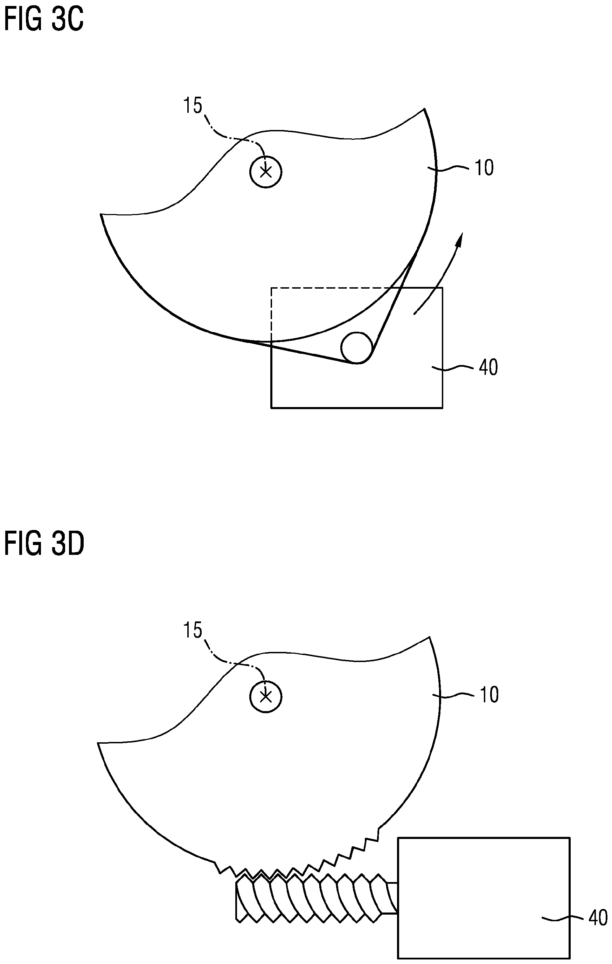

Figs. 3a to 3d show different couplings between the actuator 40 and the transmission element 10. In each of the figures 3a to 3d the first axis of rotation 15 is shown, around which the transmission element 10 rotates when it is driven by the actuator 40. In Fig. 3a, the actuator is directly connected to the transmission element 10 and drives the latter trough friction between the actuator 40 and the transmission element 10. Fig. 3b shows a gear arrangement between the actuator 40 and the transmission element 10. Thus, two gear wheels engage into each other, one gear wheel is arranged a the actuator 40 and the other gear wheel is arranged at the transmission element 10 or the transmission element 10 itself is the gear wheel. In Fig. 3c, the actuator 40 is coupled to the transmission element 10 via a belt, a v-belt, a chain or a cable. It should be noted that, in the Figs . 3a to 3c the first axis of rotation 15 and the main axis of the actuator 40 are parallel to each other. In Fig. 3d, the actuator 40 and the transmission element 10 are coupled via a worm shaft. Thus, the first axis of rotation 15 of the transmission element 10 and the main axis of the actuator 40 are perpendicular (90°) to each other. The worm shaft may comprise a self-holding characteristic and may be arranged in a space saving manner into the camera mounting device 1.

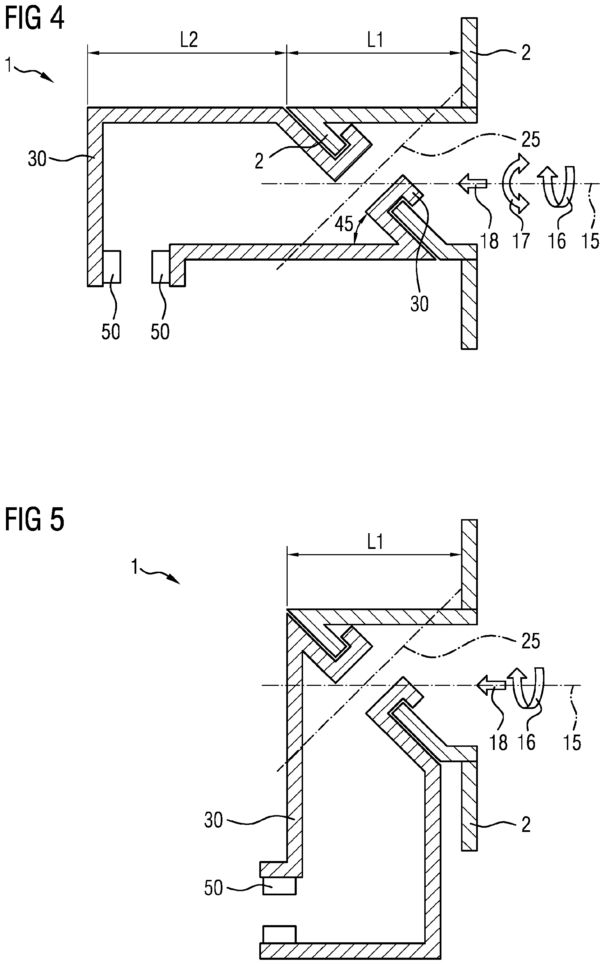

Fig. 4 shows another embodiment of the digital mirror system. The camera arm 30 is connected to the body of the vehicle 2. Thus, the vehicle 2 forms a part of the housing of the camera mounting device 1. Further, the camera arm 30 is pivotable around the second axis of rotation 25. In Fig. 4, the camera arm 30 is in an extended position. The camera arm 30 extends from the longitudinal axis of the vehicle 2 in an angle of 90° (is perpendicular to the longitudinal axis of the vehicle), wherein the second axis of rotation 25 enclose with the extending direction of the camera arm an angle of 45°. At a second end of the camera arm 30, the camera 50 is located, wherein the second end of the camera arm 30 is distant to the vehicle 2. The part of the housing of the camera mounting device, which is formed by the body of the vehicle 2, extends out from the vehicle 2 with the length L1, wherein the camera arm 30 extends an additional length of L2 out of the vehicle 2. Thus, the total extension of the camera mounting device 1 from the vehicle 2 is L1+L2. For the sake of simplification, the mechanics of the extending and/or retracting mechanism is omitted in Fig. 4. The transmission element rotates around the first axis of rotation 15, which is indicated by the right arrow 16. The middle arrow 17 indicates the direction of rotation of the camera arm 30. The left arrow 18 indicates the direction of the force from the transmission element to the camera arm 30. Further, a bearing between the camera arm 30 and the vehicle may be formed as recess in the body of the vehicle 2, which encloses an angle of 45° with the longitudinal axis of the vehicle 2. The camera arm 30 comprises a corresponding structure, which extends into and beyond the recess in the body of the vehicle 2, such that the camera arm 30 may rotate in the recess and is guided by the recess to rotate around the second axis of rotation (around an angle of 45° in view of the longitudinal axis of the vehicle).

Alternatively or in addition, the angle of the second axis of rotation 25 may not only be 45° in view of the longitudinal axis of the vehicle 2, but also 30°, 60° or 90°.

According to another embodiment of the invention the camera arm 30 may be directly connected to the actuator, without the transmission element and/or the friction area, i.e. by a spur gear. It should be noted that the axis of rotation 25 encloses an angle of 45° with the longitudinal axis of the vehicle 2. The friction area may also be present, but is not required, in the embodiment according to Fig. 4, as the friction area may protect the actuator from impacts and/or influences of a counterforce, such as an impact from an obstacle.

In Fig. 5, the digital mirror system according to Fig. 4 is shown in a retracted position, when the camera arm 30 was rotated around the second axis of rotation 25. Further, the second axis of rotation 25 encloses an angle of 45° with the longitudinal axis of the vehicle 2. In the retracted position, the camera arm 30 is parallel to the longitudinal axis of the vehicle 2. Thus, the extension of the digital mirror system from the vehicle 2 is reduced by the length L2. Therefore, the width of the vehicle 2 may be reduced.

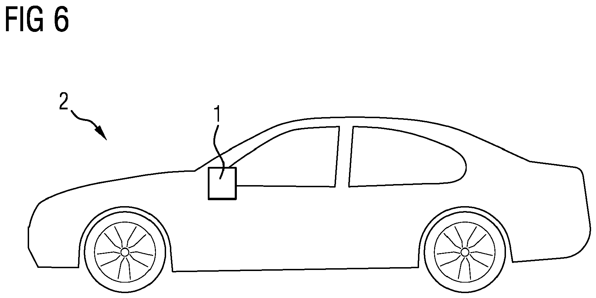

Fig. 6 shows a vehicle 2 with a camera mounting device 1 or a digital mirror system. Advantageously the camera mounting device 1 is arranged at or close to the windscreen pillar of the vehicle 2, analogue to contemporary driving mirrors. The camera mounting device 1 may comprise a camera to form a digital mirror system, such that the driver of the vehicle is able to observe the area behind and/or besides the vehicle 2. Further, the camera mounting device 1 may comprise a pivotable camera arm, which is configured to rotate or pivot around a second axis of rotation, such that the camera of the digital mirror system retracts or extends from the vehicle 2.

## Claims

1. A camera mounting device (1) for a digital mirror system of a vehicle (2), comprising:
- an actuator (40);
- a transmission element (10);
- a friction area (20); and
- a pivotable camera arm (30),
wherein the actuator (40) is coupled to the transmission element (10), and is configured to drive the transmission element (10),
wherein the transmission element (10) is coupled to a first end of the camera arm (30) via the friction area (20),
wherein the transmission element (10) is configured to rotate around a first axis of rotation (15),
wherein the camera arm (30) is configured to rotate around a second axis of rotation (25),
wherein the first axis of rotation (15) is not equal to the second axis of rotation (25),
wherein the friction area (20) is configured to allow slip between the transmission element (10) and the camera arm (30).

2. The camera mounting device (1) according to claim 1,
wherein the friction area (20) is configured to allow slip between the transmission element (10) and the camera arm (30), if a counterforce introduced on the camera arm (30) exceeds a predefined threshold, to protect the actuator (40) and/or the transmission element (10) from the introduced counterforce.

3. The camera mounting device (1) according to claim 1 or 2, further comprising a position sensor (65), which is configured to detect an actual position of the camera arm (30).

4. The camera mounting device (1) according to claim 3, further comprising a control module (60),
wherein the control module (60) is configured to control the actuator (40) according to the actual position of the camera arm (30) detected by the position sensor (65).

5. The camera mounting device (1) according to any one of the preceding claims,
wherein the actuator (40) is coupled to the transmission element (10) via a belt, a chain or a cable.

6. The camera mounting device (1) according to any one of the claims 1 to 4,
wherein the actuator (40) is coupled to the transmission element (10) via a worm shaft.

7. The camera mounting device (1) according to any one of the claims 1 to 4,
wherein the actuator (40) is coupled to the transmission element (10) via a gear arrangement.

8. The camera mounting device (1) according to any one of the claims 1 to 4,
wherein the actuator (40) is coupled to the transmission element (10) via direct contact and friction.

9. The camera mounting device (1) according to any one of the preceding claims,
wherein the first axis of rotation (15) is parallel to the second axis of rotation (25), and
wherein the first axis of rotation (15) is shifted by a predefined distance (d) from the second axis of rotation (25).

10. The camera mounting device (1) according to any one of the claims 1 to 8,
wherein the first axis of rotation (15) and the second axis of rotation (25) enclose an angle of 45°.

11. The camera mounting device (1) according to any one of the preceding claims, further comprising a spring,
wherein the spring is configured to bias the friction area (20) with a predefined contact pressure to transfer a force from the transmission element (10) to the camera arm (30), when the digital mirror system is mounted to a vehicle (2).

12. The camera mounting device (1) according to any one of the preceding claims,
wherein the actuator (40) is one of an electric motor, a pneumatic drive or a hydraulic drive.

13. A digital mirror system, comprising:
a camera (50); and
a camera mounting device (1) according to any one of the preceding claims,
wherein the camera (50) is arranged at a second end of the camera arm (30) of the camera mounting device (1), which is opposite to the friction area (20), and
wherein the camera (50) faces to the side and/or backwards.

14. A vehicle (2) comprising a camera mounting device (1) according to any one of the claims 1 to 12 and/or a digital mirror system according to claim 13.
